# EUROPEAN PATENT SPECIFICATION

(11) **EP 0 983 473 B1**
(45) Date of publication and mention of the grant of the patent: **11.12.2002**
(21) Application number: 98921618.9
(22) Date of filing: 15.05.1998
(51) Int. Cl.: F24D 19/10

(54) **PUMP CONTROL**
PUMPENKONTROLLSYSTEM
REGULATEUR DE POMPE

(30) Priority: 19.05.1997 GB 9710139
(43) Date of publication of application: 08.03.2000
(73) Proprietor: Honeywell Control Systems Ltd., Bracknell, Berkshire RG12 1EB (GB)
(72) Inventor: FERGUSON, Colin, Thomas, Lanarkshire ML3 7JY (GB)
(74) Representative: Fox-Male, Nicholas Vincent Humbert
(86) International application number: GB9801392
(87) International publication number: WO98053257

(56) References cited:
- EP-A- 0 283 633

## Description

The present invention relates to apparatus for and a method of controlling a pump, and more especially for one in a heating system with a boiler.

In a conventional heating system (see e.g. EP-A-283 633) with modulating boiler, when the boiler is in operation but there is no immediate need for additional space heating, the burner unit of the boiler is put into a low fire/off mode, but the pump continues to operate in order to ensure satisfactory measurement of the water temperature under control of the boiler.

The present invention provides apparatus as defined in Claim 1 hereinafter.

In this way, the invention allows the pump to be turned off when the burner unit is in an off/Iow ignition mode while not providing risk from lack of control from the boiler, and thereby provides significantly reduced energy consumption. In prior art heating systems, any energy savings benefiting from modulation of the burner ignition, while considered worthwhile obtaining, are often outweighed by the extra energy consumption and hence monetary cost of keeping the pump operating.

The apparatus may include the features of any one or more of the dependent Claims 2 to 9.

The present invention also provides a method as defined in Claim 11 hereinafter.

The method may include the features of any one or more of dependent Claims 12 to 17.

Preferred, advantageous features of the invention include any one or more of the following:-
means to modify the time period during which the pump is next off, in dependence on the delay between the most recent turn-on of the pump and the following call for operation of the burner;
the means to turn the pump off operates for a duration corresponding to the time interval;
the means to turn off the pump is not operable for the first period of no call for the burner unit;
the delay measurement means measures the delay between (i) re-activation of the pump at the end of one period, and (ii) the next call for operation of the boiler, and also modification means to modify the time for which the pump is off in the next sequence in accordance with output from the delay-measurement means;
means to effect correction of the pump-off time for each sequence beginning with a new signal BO;
means to effect correction of the pump-off time repeatedly until the delay is at a predetermined percentage value of the time interval.

A preferred embodiment of the present invention provides apparatus for control of a pump for a heating system with a boiler having a burner unit for actuation by a signal calling for operation and a pump for circulation of fluid around a heating system, the apparatus characterised by: means to determine the time interval between (i) the beginning of a first period, after each start-up of the boiler, during which there is no call for operation of the burner unit, and (ii) the beginning of the subsequent call for operation of the burner unit, during which time interval the pump operates; means to turn the pump off at the beginning of the second period after each start-up of the boiler, during which period there is no call, and for a length of time corresponding to the output of the determining means; means to measure the delay between (i) re-activation of the pump at the end of said second period, and (ii) the next call for operation of the boiler; means to turn the pump off at the beginning of the third period after each start-up of the boiler and for a length of time corresponding to that effected during said second period modified, as appropriate, by the measured delay at the end of said second period.

The present invention also provides a method of control of a pump for a heating system with a boiler having a burner unit for actuation by a signal calling for operation and a pump for circulation of fluid around a heating system, the method characterised by: determining the time interval between (i) the beginning of a period during which there is no call for operation of the burner unit, and (ii) the beginning of the subsequent call for operation of the burner unit; and turning the pump off, at the beginning of the next period during which there is no call for operation of the burner unit, and for a time period in dependence on the output of the determining step

The present invention also provides a method of control of a pump for a heating system with a boiler having a burner unit for actuation by a signal calling for operation and a pump for circulation of fluid around a heating system, the method characterised by: determining the time interval between (i) the beginning of a first period, after each start-up of the boiler, during which there is no call for operation of the burner unit, and (ii) the beginning of the subsequent call for operation of the burner unit, during which time interval the pump operates; turning the pump off at the beginning of the second period after each start-up of the boiler, during which period there is no call, and for a length of time corresponding to the output of the determining means; measuring the delay between (i) re-activation of the pump at the end of said second period, and (ii) the next call for operation of the boiler; turning the pump off at the beginning of the third period after each start-up of the boiler; and for a length of time corresponding to that effected during said second period modified, as appropriate, by the measured delay at the end of said second period.

The present invention also provides a control unit comprising means to determine the time interval between (i) the beginning of a period during which there is no call for operation of the burner unit, and (ii) the beginning of the subsequent call for operation of the burner unit, and means to turn the pump off, at the beginning of the next period during which there is no call for operation of the burner unit, for a time period in dependence on the output of the determining means.

The present invention also provides a control unit comprising means to determine the time interval between (i) the beginning of a first period, after each start-up of the boiler, during which there is no call for operation of the burner unit, and (ii) the beginning of the subsequent call for operation of the burner unit, during which time interval the pump operates; means to turn the pump off at the beginning of the second period after each start-up of the boiler, during which period there is no call, and for a length of time corresponding to the output of the determining means; means to measure the delay between (i) re-activation of the pump at the end of said second period, and (ii) the next call for operation of the boiler; means to turn the pump off at the beginning of the third period after each start-up of the boiler and for a length of time corresponding to that effected during said second period modified, as appropriate, by the measured delay at the end of said second period.

Any of the control units may also comprise flame control means with features described in the specific description, and/or room temperature control means with features described in the specific description.

The present invention is particularly suited to a heating system utilising a modulating boiler (whether in capacity cpntrol or water-temperature control), but is also applicable to a boiler without modulating control; also the invention is applicable to heating systems incorporating the provision of domestic hot water as well as space heating.

In order that the invention may more readily be understood, a description is now given, by way of example only, reference being made to the accompanying drawings, in which:
Figure 1 is a schematic block diagram of a prior art arrangement;
Figure 2 is a schematic block diagram of a heating system embodying the present invention;
Figure 3 is a graphic representation of the operations of the boiler and pump of the system of Figure 2; and
Figure 4 is a static machine diagram of the embodiment of Figure 2 in operation.

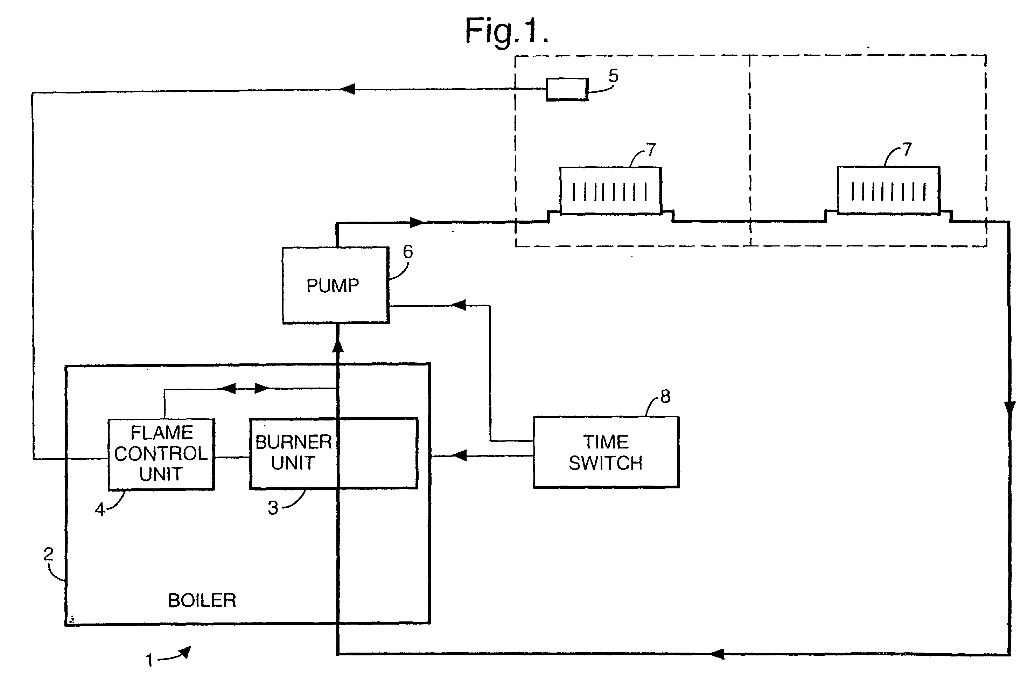

The conventional heating system 1 of Figure 1 incorporates a boiler 2 with a burner unit 4, the ignition and operation of which is achieved by flame control unit 4 subject to any signals from room temperature controller 5 calling for heat and instructing the burner to provide a specified water temperature, Tₛ, at the output of the boiler 2. A pump 6 ensures circulation of water through boiler 2, around the pipes of system 1 and hence through radiators 7 in a number of rooms, one of which contains controller 5. When flame control unit 4 senses a temperature below its setting of Tₛ, it sends a "BURNER-ON" signal BO to burner unit 4 instructing ignition of the burners to a level to provide the water temperature Tₛ at the boiler output. Flame control unit 4 controls and modulates the output of the burner unit 3 in accordance with the difference between the actual water temperature and Tₛ until the difference is zero, whereupon flame control unit 4 sends a "BURNER-OFF" signal BF to burner unit 3.

Boiler 2 is turned on and off under the control of a time switch 8 which likewise activates or de-activates pump 6 which must be running all the time boiler 2 is on (even when there is no call for heat) in order to ensure that the heating system 1 is under control by monitoring of the boiler output water temperature.

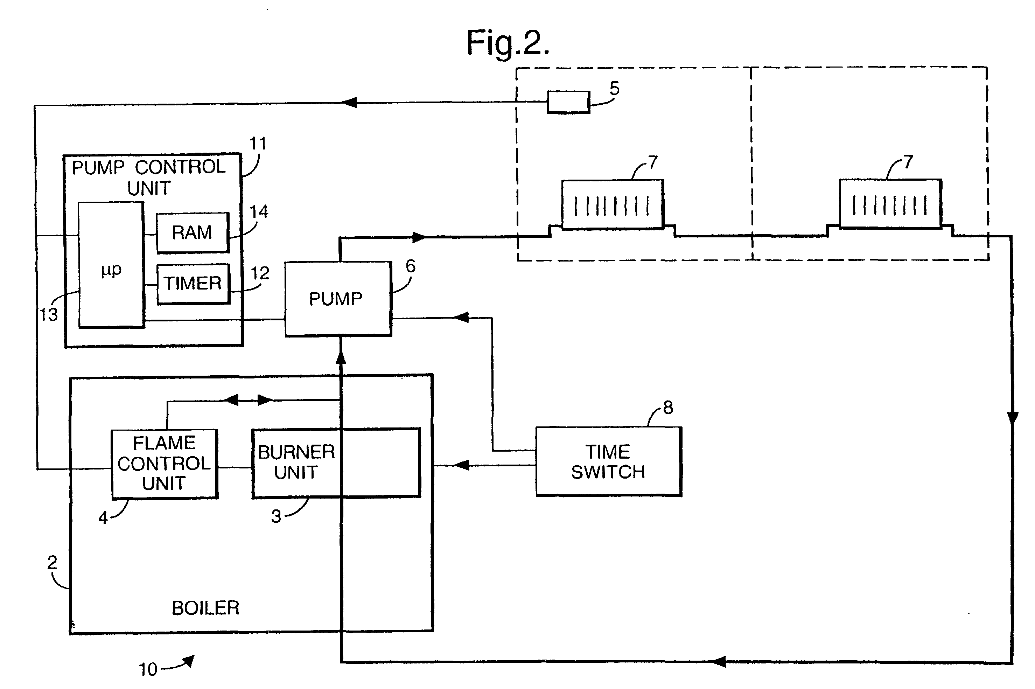

Figure 2 illustrates one embodiment of the present invention being a heating system 10 with many elements of the conventional heating system 1 (wherein Figure 2 uses the same reference numerals as Figure 1 where appropriate to indicate equivalent elements), a major distinction being in the provision of a pump control unit 11 incorporating a timer 12, a microprocessor 13 and RAM storage 14; in this way pump 6 is able to be off when there is no call for burner operation without any need to monitor the water temperature in system 10, and hence the overall power used is reduced. In order to achieve these features, pump control 11 operates as follows:-

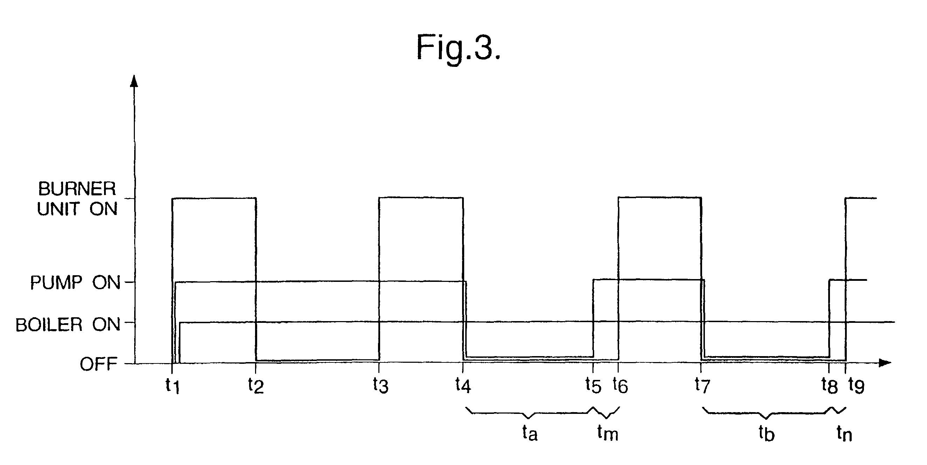

When boiler 2 is turned on by time switch 8 (or alternatively by manual override), pump 6 is likewise actuated. Assuming that the ambient temperature in the room containing controller 5 is below its setting Tₛᵢ, whic is the temperature achieved when the boiler output water temperature is Tₛ, controller 5 sends a call for heat signal to flame control unit 4 specifying an appropriate water temperature output, Tₛ, and so burner unit 3 is activated, causing heated water to be circulated around system 10 (this being the situation at time t₁ of Figure 3).

At t₂, the water temperature at the output of boiler 2 has risen sufficiently to reach Tₛ and so flame control unit 4 sends signal BF (i) to turn off the burner unit 3 and (ii) to pump control unit 11 so that microprocessor 13 starts timer 12 and sends data on t₂ for storage in RAM store 14; pump 6 remains on and so continues to pump water (not now being heated) around system 10.

At t₃, the water temperature sensed by flame control unit 4 has fallen again to a level such that the difference between the water temperature and Tₛ causes flame control unit 4 to send signal BO (i) to ignite the burner unit 3 and operate it at an appropriate burner rate, and (ii) to stop timer 12 which sends, under direction of microprocessor 13, data on t₃ for storage in RAM store 14.

At t₄, flame control unit 4 once again sends signal BF (i) to turn off burner unit 3 and (ii) to pump control unit 11, but now microprocessor 12, using the data in RAM store 14, operates to turn off pump 6 for a length of time tₐ being in length the difference between t₃ and t₂.

At t₅, i.e. when pump 6 has been off for time tₐ, pump control unit 11 starts up pump 6, and timer 12 starts timing how long it takes before flame control unit 4 sends another signal BO (i.e. at t₆) calling for heat; microprocessor 13 uses the measured time, tₘ, to make a correction to tₐ for use when pump 6 is next turned off (but, of course, while boiler 6 is still on). Thus, for example, if burner unit 3 is activated substantially immediately (e.g. tₘ = 1 minute or less), the next off-period for pump 6 (i.e. t₈ - t₇) is reduced by 1 minute , so that t_{b} = tₐ - 1 minute. If burner unit 3 is activated within a relatively short period (e.g. tₘ is between 1 and 3 minutes ), the next off-period t_{b} remains the same as tₐ. If burner unit 3 is activated a long time after tₛ (e.g. tₘ is greater than 3 mintues), then the next off-period is increased, for example by tₘ, so that t_{b} = tₐ + tₘ.

At t₁₀ (not shown in Figure 3), when flame control unit 4 next sends signal BO, pump 6 is maintained off for a length of time based on t_{b} after any correction deemed appropriate due to the size of tₙ and calculated in like manner to the size of t_{b} as indicated above. This correction routine is repeated for each sequence beginning with flame control unit 4 sending a signal BO. In a modification, the correction routine is repeated until the delay between pump 6 being turned on and burner unit 4 being turned on (e.g. tₘ, tₙ) is between 100% and 105% of the pump-off period in two successive sequences, whereupon the correction routine is not repeated for a predetermined number (e.g. 20) of sequences.

In a modification to the embodiment as illustrated, pump control unit 11 and its functions can be incorporated within the room temperature controller 5 or the flame control unit 4 or elsewhere in the boiler 2 and utilise any microprocessor, timer and RAM store therein.

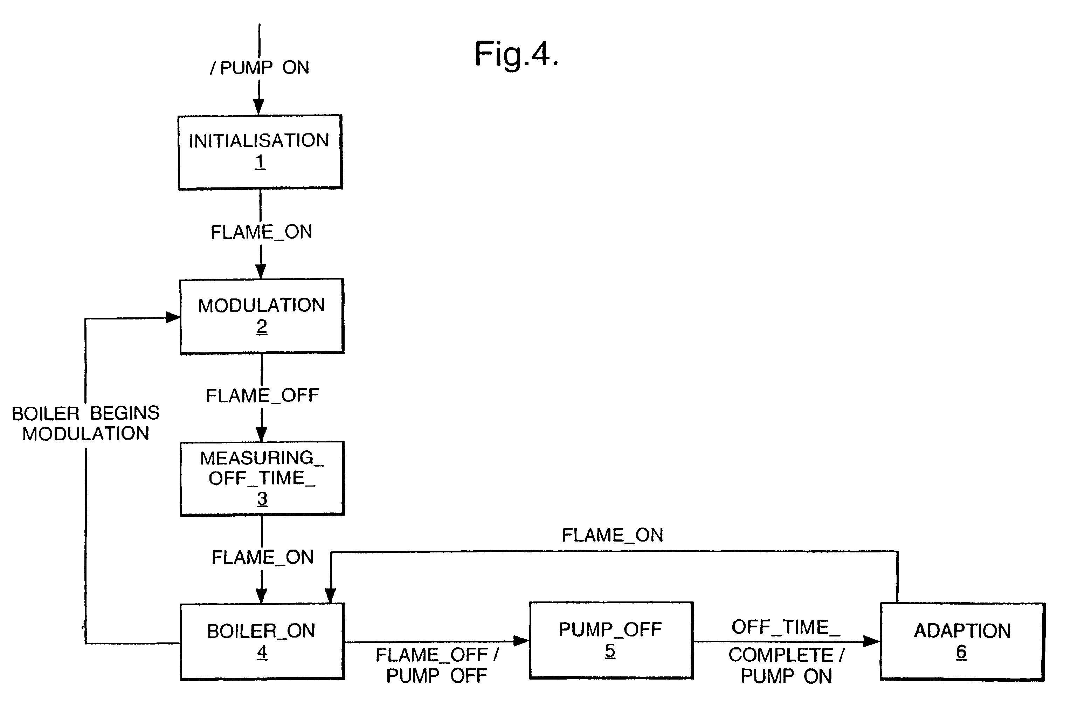

To explain the method of operation of system 10 in terms of the pump control state machine as illustrated in Figure 4:-

When the boiler 2 is first switched on, pump 6 is switched on and the state machine remains in the "Initialisation" state until the burner unit 4 switches on. When the flame switches back on the state machine changes to "Boiler_on" and the measured time is stored as the "Off Time". The next time that burner unit 4 switches off, pump 6 is switched off immediately and the state machine changes to "Pump_off" where it remains until a time equal to "Off Time" has passed.

Once the "Off-Time" is complete, the pump is switched back on and the time until burner unit 4 switches on is measured. If the burner unit 4 switches on immediately, the "Off Time" is reduced: if burner unit 4 does not switch on immediately, but does switch on within a short time, then "Off time" remains unchanged. If burner unit 4 takes longer to switch on, then "Off Time" is increased.

When burner unit 4 switches back on and the "Off Time" has been checked, the state machine returns to "Boiler_on" and the cycle begins again.

If, while burner unit 4 is on, boiler 6 begins modulating, then the state machine returns to Modulation and a new measurement of "Off Time" will be made when burner unit 4 next switches off.

## Claims

1. Apparatus controlling pump (6) of a heating system (10) with a boiler (2) having a burner unit (3) for actuation by a signal (BO) calling for operation and a pump (6) for circulation of fluid around a heating system (10), the apparatus **characterised by**: means (11) to determine the time interval between (i) the beginning of a period during which there is no call for operation of the burner unit (3), and (ii) the beginning of the subsequent call for operation of the burner unit (3); and means (11) to turn the pump off, at the beginning of the next period during which there is no call for operation of the burner unit (3), for a time period in dependence on the output of the determining means (11).

2. Apparatus according to Claim 1 **characterised by** means (11) to modify the time period during which the pump (6) is next off, in dependence on the delay between the most recent turn-on of the pump (6) and the following call for operation of the burner unit (3).

3. Apparatus according to Claim 1 or 2 **characterised in that** the means (11) to turn the pump (6) off operates for a duration corresponding to the time interval.

4. Apparatus according to any preceding Claim, **characterised in that** the means (11) to turn off the pump (6) is not operable for the first period of no call for the burner unit (3) after each start-up of the apparatus.

5. Apparatus according to any preceding Claim,
**characterised by**: means (11) to determine the time interval between (i) the beginning of a first period, after each start-up of the boiler (2), during which there is no call for operation of the burner unit (3), and (ii) the beginning of the subsequent call for operation of the burner unit (3), during which time interval the pump operates; means (11) to turn the pump (6) off at the beginning of the second period after each start-up of the boiler, during which period there is no call, and for a length of time corresponding to the output of the determining means (11); means (11) to measure the delay between (i) re-activation of the pump (6) at the end of said second period, and (ii) the next call for operation of the boiler; means (11) to turn the pump (6) off at the beginning of the third period after each start-up of the boiler (2) and for a length of time corresponding to that effected during said second period modified, as appropriate, by the measured delay at the end of said second period.

6. Apparatus according to Claim 5, **characterised in that** the delay measurement means (11) measures the delay between (i) re-activation of the pump at the end of one period, and (ii) the next call for operation of the boiler, and **characterised by** modification means (11) to modify the time for which the pump (6) is off in the next sequence in accordance with output from the delay-measurement means (11).

7. Apparatus according to any preceding Claim **characterised by** means (11) to effect correction of the pump-off time for each sequence beginning with a new signal BO.

8. Apparatus according to any preceding Claims **characterised by** means to effect correction of the pump-off time repeatedly until the delay is at a predetermined percentage value of the time interval.

9. Apparatus according to any preceding Claim **characterised in that** the apparatus comprises a control unit for a heating system.

10. A heating system (10) incorporating apparatus for control of a pump (6), the apparatus being according to any of Claims 1 to 9.

11. A method of control of a pump (6) for a heating system (10) with a boiler (2) having a burner unit (3) for actuation by a signal (BO) calling for operation and a pump (6) for circulation of fluid around a heating system (10), the method **characterised by**: determining the time interval between (i) the beginning of a period during which there is no call for operation of the burner unit (3), and (ii) the beginning of the subsequent call for operation of the burner unit 3; and turning the pump (6) off, at the beginning of the next period during which there is no call for operation of the burner unit (3), for a time period in dependence on the output of the determining step.

12. A method according to Claim 11, **characterised by** modifying the time period, during which the pump (6) is next off, in dependence on the delay between the most recent turn-on of the pump (6) and the following call for operation of the burner unit (3).

13. A method according to Claim 11 or 12, **characterised by** turning the pump (6) off for a duration corresponding to the time interval.

14. A method according to any of Claims 11 to 13 **characterised by** maintaining the pump (6) operable for the first time period of no call for the burner unit (3) after each start-up of the apparatus.

15. A method according to any of Claims 11 to 14,
**characterised by**: determining the time interval between (i) the beginning of a first period, after each start-up of the boiler (2), during which there is no call for operation of the burner unit (3), and (ii) the beginning of the subsequent call for operation of the burner unit (3), during which time interval the pump (6) operates; turning the pump (6) off at the beginning of the second period after each start-up of the boiler (2), during which period there is no call, and for a length of time corresponding to the output of the determining step; measuring the delay between (i) re-activation of the pump (6) at the end of said second period, and (ii) the next call for operation of the boiler (2); turning the pump (6) off at the beginning of the third period after each start-up of the boiler (2); and for a length of time corresponding to that effected during said second period modified, as appropriate, by the measured delay at the end of said second period.

16. A method according to Claim 15 **characterised by** measuring the delay between (i) re-activation of the pump (6) at the end of one period, and (ii) the next call for operation of the boiler (2), and modifying the time for which the pump (6) is off in the next sequence in accordance with output from the delay-measurement step.

17. A method according to any of Claims 11 to 16 **characterised by** effecting correction of the pump-off time for each sequence beginning with a new signal BO.

18. A method according to any of Claims 11 to 16 **characterised by** repeating correction of the pump-off time until the delay is at a predetermined percentage value of the time interval.

## Patentansprüche

1. Vorrichtung, die eine Pumpe (6) eines Heizsystems (10) steuert, das einen Kessel (2) mit einer Brennereinheit (3) aufweist, zur Aktivierung durch ein Signal (BO), das den Betrieb aufruft, und eine Pumpe (6) zum Umwälzen eines Fluids um ein Heizsystem (10), wobei die Vorrichtung **gekennzeichnet ist durch**: ein Mittel (11) zum Bestimmen des Zeitintervalls zwischen (i) dem Beginn einer Periode, während der kein Aufruf für den Betrieb der Brennereinheit (3) vorliegt, und (ii) dem Beginn des nachfolgenden Aufrufs zum Betrieb der Brennereinheit (3); und ein Mittel (11) zum Abschalten der Pumpe zu Beginn der nächsten Periode, während der kein Aufruf für den Betrieb der Brennereinheit (3) vorliegt, über eine Zeitperiode in Abhängigkeit von der Ausgabe des Bestimmungsmittels (11).

2. Vorrichtung nach Anspruch 1, **gekennzeichnet durch** ein Mittel (11) zum Modifizieren der Zeitperiode, während der die Pumpe (6) das nächste Mal abgeschaltet ist, in Abhängigkeit von der Verzögerung zwischen dem jüngsten Einschalten der Pumpe (6) und dem folgenden Aufruf zum Betrieb der Brennereinheit (3).

3. Vorrichtung nach Anspruch 1 oder 2, **dadurch gekennzeichnet, daß** das Mittel (11) zum Abschalten der Pumpe (6) über eine dem Zeitintervall entsprechende Dauer arbeitet.

4. Vorrichtung nach einem der vorhergehenden Ansprüche, **dadurch gekennzeichnet, daß** das Mittel (11) zum Abschalten der Pumpe (6) während der ersten Periode ohne Aufruf der Brennereinheit (3) nach jedem Anfahren der Vorrichtung nicht arbeiten kann.

5. Vorrichtung nach einem der vorhergehenden Ansprüche, **gekennzeichnet durch**: ein Mittel (11) zum Bestimmen des Zeitintervalls zwischen (i) dem Beginn einer ersten Periode nach jedem Anfahren des Kessels (2), während der kein Aufruf für den Betrieb der Brennereinheit (3) vorliegt, und (ii) dem Beginn des nachfolgenden Aufrufs für den Betrieb der Brennereinheit (3), wobei die Pumpe während dieses Zeitintervalls arbeitet; ein Mittel (11) zum Abschalten der Pumpe (6) zu Beginn der zweiten Periode nach jedem Anfahren des Kessels, während der kein Aufruf existiert, und für eine Zeitdauer entsprechend der Ausgabe des Bestimmungsmittels (11); ein Mittel (11) zum Messen der Verzögerung zwischen (i) der Reaktivierung der Pumpe (6) am Ende der zweiten Periode und (ii) dem nächsten Aufruf für den Betrieb des Kessels; ein Mittel (11) zum Abschalten der Pumpe (6) zu Beginn der dritten Periode nach jedem Anlaufen des Kessels (2) und für eine Zeitdauer, die der entspricht, die während der zweiten Periode bewirkt und gegebenenfalls **durch** die gemessene Verzögerung am Ende der zweiten Periode modifiziert wurde.

6. Vorrichtung nach Anspruch 5, die **dadurch gekennzeichnet ist, daß** das Verzögerungsmeßmittel (11) die Verzögerung zwischen (i) der Reaktivierung der Pumpe am Ende einer Periode und (ii) dem nächsten Aufruf für den Betrieb des Kessels mißt, und das **gekennzeichnet ist durch** ein Modifikationsmittel (11) zum Modifizieren der Zeit, während der die Pumpe (6) in der nächsten Sequenz gemäß der Ausgabe von dem Verzögerungsmeßmittel (11) abgeschaltet ist.

7. Vorrichtung nach einem der vorhergehenden Ansprüche, **gekennzeichnet durch** ein Mittel (11) zum Bewirken einer Korrektur der Pumpenabschaltzeit für jede Sequenz, beginnend mit einem neuen Signal BO.

8. Vorrichtung nach einem der vorhergehenden Ansprüche, **gekennzeichnet durch** ein Mittel zum wiederholten Bewirken einer Korrektur der Pumpenabschaltzeit, bis die Verzögerung einen vorbestimmten Prozentwert des Zeitintervalls erreicht hat.

9. Vorrichtung nach einem der vorhergehenden Ansprüche, **dadurch gekennzeichnet, daß** die Vorrichtung eine Steuereinheit für ein Heizsystem umfaßt.

10. Heizsystem (10), in das die Vorrichtung zum Steuern einer Pumpe (6) integriert ist, wobei die Vorrichtung einem der Ansprüche 1 bis 9 entspricht.

11. Vorrichtung zum Steuern einer Pumpe (6) für ein Heizsystem (10), das einen Kessel (2) mit einer Brennereinheit (3) aufweist, zur Aktivierung durch ein Signal (BO), das den Betrieb aufruft, und eine Pumpe (6) zum Umwälzen eines Fluids um ein Heizsystem (10), wobei das Verfahren **gekennzeichnet ist durch**: Bestimmen des Zeitintervalls zwischen (i) dem Beginn einer Periode, während der kein Aufruf für den Betrieb der Brennereinheit (3) vorliegt, und (ii) dem Beginn des nachfolgenden Aufrufs für den Betrieb der Brennereinheit (3); und Abschalten der Pumpe (6) zu Beginn der nächsten Periode, während der kein Aufruf für den Betrieb der Brennereinheit (3) vorliegt, über eine Zeitperiode in Abhängigkeit von der Ausgabe des Bestimmungsschritts.

12. Verfahren nach Anspruch 11, **gekennzeichnet durch** das Modifizieren der Zeitperiode, während der die Pumpe (6) das nächste Mal abgeschaltet ist, in Abhängigkeit von der Verzögerung zwischen dem jüngsten Einschalten der Pumpe (6) und dem folgenden Aufruf für den Betrieb der Brennereinheit (3).

13. Verfahren nach Anspruch 11 oder 12, **gekennzeichnet durch** das Abschalten der Pumpe (6) über eine dem Zeitintervall entsprechende Dauer.

14. Verfahren nach einem der Ansprüche 11 bis 13, **dadurch gekennzeichnet, daß** die Pumpe (6) während der ersten Periode ohne Aufruf der Brennereinheit (3) nach jedem Anfahren der Vorrichtung arbeitsfähig gehalten wird.

15. Verfahren nach einem der Ansprüche 11 bis 14, **gekennzeichnet durch**: Bestimmen des Zeitintervalls zwischen (i) dem Beginn einer ersten Periode nach jedem Anfahren des Kessels (2), während der kein Aufruf für den Betrieb der Brennereinheit (3) vorliegt, und (ii) dem Beginn des nachfolgenden Aufrufs für den Betrieb der Brennereinheit (3), wobei die die Pumpe (6) während dieses Zeitintervalls arbeitet; Abschalten der Pumpe (6) zu Beginn der zweiten Periode nach jedem Anfahren des Kessels (2), während der kein Aufruf existiert, und für eine Zeitdauer entsprechend der Ausgabe des Bestimmungsschritts; Messen der Verzögerung zwischen (i) der Reaktivierung der Pumpe (6) am Ende der zweiten Periode und (ii) dem nächsten Aufruf für den Betrieb des Kessels (2); Abschalten der Pumpe (6) zu Beginn der dritten Periode nach jedem Anlaufen des Kessels (2) und für eine Zeitdauer, die der entspricht, die während der zweiten Periode bewirkt und gegebenenfalls **durch** die gemessene Verzögerung am Ende der zweiten Periode modifiziert wurde.

16. Verfahren nach Anspruch 15, **gekennzeichnet durch** das Messen der Verzögerung zwischen (i) der Reaktivierung der Pumpe (6) am Ende einer Periode und (ii) dem nächsten Aufruf für den Betrieb des Kessels (2) und Modifizieren der Zeit, während der die Pumpe (6) in der nächsten Sequenz gemäß der Ausgabe von der Verzögerungsmeßschritt abgeschaltet ist.

17. Verfahren nach einem der Ansprüche 11 bis 16, **gekennzeichnet durch** das Bewirken einer Korrektur der Pumpenabschaltzeit für jede Sequenz, beginnend mit einem neuen Signal BO.

18. Verfahren nach einem der Ansprüche 11 bis 16, **gekennzeichnet durch** die wiederholte Korrektur der Pumpenabschaltzeit, bis die Verzögerung einen vorbestimmten Prozentwert des Zeitintervalls erreicht hat.

## Revendications

1. Appareil de régulation d'une pompe (6) pour un système de chauffage (10) comportant une chaudière (2) dotée d'une unité de brûleur (3) appelée à être activée par un signal (BO) demandant sa mise en fonctionnement, et une pompe (6) destinée à faire circuler un fluide autour d'un système de chauffage (10), l'appareil étant **caractérisé par** : un moyen (11) de détermination de l'intervalle de temps entre (i) le début d'une période durant laquelle la mise en fonctionnement de l'unité de brûleur (3) n'est pas demandée, et (ii) le début de la demande subséquente de mise en fonctionnement de l'unité de brûleur (3) ; et un moyen (11) de coupure de la pompe, au début de la période suivante durant laquelle la mise en fonctionnement de l'unité de brûleur (3) n'est pas demandée, pendant une période de temps qui est fonction de la sortie du moyen de détermination (11).

2. Appareil selon la revendication 1, **caractérisé par** un moyen (11) de modification de la période de temps durant laquelle la pompe (6) est à nouveau coupée, en fonction du délai entre la mise en marche la plus récente de la pompe (6) et la demande suivante de mise en fonctionnement de l'unité de brûleur (3).

3. Appareil selon la revendication 1 ou 2, **caractérisé en ce que** le moyen (11) de coupure de la pompe (6) fonctionne pendant une durée correspondant à l'intervalle de temps.

4. Appareil selon l'une quelconque des revendications précédentes, **caractérisé en ce que** le moyen (11) de coupure de la pompe (6) ne peut pas fonctionner pendant la première période sans demande de mise en fonctionnement de l'unité de brûleur (3) après chaque démarrage de l'appareil.

5. Appareil selon l'une quelconque des revendications précédentes, **caractérisé par** : un moyen (11) de détermination de l'intervalle de temps entre (i) le début d'une première période, après chaque démarrage de la chaudière (2), durant laquelle la mise en fonctionnement de l'unité de brûleur (3) n'est pas demandée, et (ii) le début de la demande subséquente de mise en fonctionnement de l'unité de brûleur (3), intervalle de temps durant lequel la pompe fonctionne ; un moyen (11) de coupure de la pompe (6) au début de la deuxième période après chaque démarrage de la chaudière, période durant laquelle la mise en fonctionnement n'est pas demandée, et pendant une durée correspondant à la sortie du moyen de détermination (11) ; un moyen (11) de mesure du délai entre (i) la réactivation de la pompe (6) à la fin de ladite deuxième période, et (ii) la demande suivante de mise en fonctionnement de la chaudière ; un moyen (11) de coupure de la pompe (6) au début de la troisième période après chaque démarrage de la chaudière (2) et pendant une durée correspondant à celle écoulée durant ladite deuxième période, modifiée, selon le cas, par le délai mesuré à la fin de ladite deuxième période.

6. Appareil selon la revendication 5, **caractérisé en ce que** le moyen (11) de mesure du délai mesure le délai entre (i) la réactivation de la pompe à la fin d'une période, et (ii) la demande suivante de mise en fonctionnement de la chaudière, et **caractérisé par** un moyen (11) de modification de la durée de coupure de la pompe (6) dans la séquence suivante, conformément à la sortie du moyen (11) de mesure du délai.

7. Appareil selon l'une quelconque des revendications précédentes, **caractérisé par** un moyen (11) de correction de la durée de coupure de la pompe pour chaque séquence débutant par un nouveau signal BO.

8. Appareil selon l'une quelconque des revendications précédentes, **caractérisé par** un moyen de correction répétée de la durée de coupure de la pompe jusqu'à ce que le délai représente une valeur de pourcentage prédéterminée de l'intervalle de temps.

9. Appareil selon l'une quelconque des revendications précédentes, **caractérisé en ce qu'**il comprend une unité de régulation d'un système de chauffage.

10. Système de chauffage (10) incorporant l'appareil de régulation d'une pompe (6) selon l'une quelconque des revendications 1 à 9.

11. Procédé de régulation d'une pompe (6) pour un système de chauffage (10) comportant une chaudière (2) dotée d'une unité de brûleur (3) appelée à être activée par un signal (BO) demandant sa mise en fonctionnement, et une pompe (6) destinée à faire circuler un fluide autour d'un système de chauffage (10), le procédé étant **caractérisé par** : la détermination de l'intervalle de temps entre (i) le début d'une période durant laquelle la mise en fonctionnement de l'unité de brûleur (3) n'est pas demandée, et (ii) le début de la demande subséquente de mise en fonctionnement de l'unité de brûleur (3) ; et la coupure de la pompe (6), au début de la période suivante durant laquelle la mise en fonctionnement de l'unité de brûleur (3) n'est pas demandée, pendant une période de temps qui est fonction du résultat de l'étape de détermination.

12. Procédé selon la revendication 11, **caractérisé par** la modification de la période de temps durant laquelle la pompe (6) est à nouveau coupée, en fonction du délai entre la mise en marche la plus récente de la pompe (6) et la demande suivante de mise en fonctionnement de l'unité de brûleur (3).

13. Procédé selon la revendication 11 ou 12, **caractérisé par** la coupure de la pompe (6) pendant une durée correspondant à l'intervalle de temps.

14. Procédé selon l'une quelconque des revendications 11 à 13, **caractérisé par** le maintien de la pompe (6) en fonctionnement pendant la première période de temps sans demande de mise en fonctionnement de l'unité de brûleur (3) après chaque démarrage de l'appareil.

15. Procédé selon l'une quelconque des revendications 11 à 14, **caractérisé par** : la détermination de l'intervalle de temps entre (i) le début d'une première période, après chaque démarrage de la chaudière (2), durant laquelle la mise en fonctionnement de l'unité de brûleur (3) n'est pas demandée, et (ii) le début de la demande subséquente de mise en fonctionnement de l'unité de brûleur (3), intervalle de temps durant lequel la pompe (6) fonctionne ; la coupure de la pompe (6) au début de la deuxième période après chaque démarrage de la chaudière (2), période durant laquelle la mise en fonctionnement n'est pas demandée, et pendant une durée correspondant au résultat de l'étape de détermination ; la mesure du délai entre (i) la réactivation de la pompe (6) à la fin de ladite deuxième période, et (ii) la demande suivante de mise en fonctionnement de la chaudière (2) ; la coupure de la pompe (6) au début de la troisième période après chaque démarrage de la chaudière (2) et pendant une durée correspondant à celle écoulée durant ladite deuxième période, modifiée, selon le cas, par le délai mesuré à la fin de ladite deuxième période.

16. Procédé selon la revendication 15, **caractérisé par** la mesure du délai entre (i) la réactivation de la pompe (6) à la fin d'une période, et (ii) la demande suivante de mise en fonctionnement de la chaudière (2), et la modification de la durée de coupure de la pompe (6) dans la séquence suivante, conformément au résultat de l'étape de mesure du délai.

17. Procédé selon l'une quelconque des revendications 11 à 16, **caractérisé par** la correction de la durée de coupure de la pompe pour chaque séquence débutant par un nouveau signal BO.

18. Procédé selon l'une quelconque des revendications 11 à 16, **caractérisé par** la correction répétée de la durée de coupure de la pompe jusqu'à ce que le délai représente une valeur de pourcentage prédéterminée de l'intervalle de temps.
